# EUROPÄISCHE PATENTSCHRIFT

(11) **EP 2 656 996 B1**
(45) Veröffentlichungstag und Bekanntmachung des Hinweises auf die Patenterteilung: **04.09.2019**
(21) Anmeldenummer: 13165457.6
(22) Anmeldetag: 25.04.2013
(51) Int. Cl.: B29L 31/00, B29C 44/56, B26D 7/18, B26D 3/00

(54) **Vorrichtung und Verfahren zum Entfernen eines Schaumstoffausschnittes**
Device and method for removing a foam cutout
Dispositif et procédé destiné à éliminer une section de mousse

(30) Priorität: 25.04.2012 DE 102012103649; 13.05.2012 DE 202012101762 U; 13.05.2012 DE 202012101760 U
(43) Veröffentlichungstag der Anmeldung: 30.10.2013
(73) Patentinhaber: Global Engineering Workshop Ltd, 63762 Grossostheim (DE)
(72) Erfinder: Sauer, Alexander, 63762 Großostheim (DE); Sauer, Boris, 63743 Aschaffenburg (DE); Brauch, Bernhard, 63834 Sulzbach am Main (DE)
(74) Vertreter: Baumann, Rüdiger Walter

(56) Entgegenhaltungen:
- EP-A1- 2 149 436
- EP-A1- 2 356 924
- DE-A1- 2 234 864

## Beschreibung

Die Erfindung betrifft eine Vorrichtung zum Entfernen eines Schaumstoffausschnittes aus einem Schlitz eines Schaumstoffproduktes, insbesondere einer Matratze, umfassend einen Förderer für das Schaumstoffprodukt mit einem Eintragsbereich und einem Austragsbereich und mindestens ein Entfernungswerkzeug zum Entfernen des Schaumstoffteils aus dem Schlitz.

Matratzen oder sonstige geformte Schaumstoffartikel werden aus geschäumtem Material (bspw. PU) bestehenden Rohkörpern hergestellt. Um die Matratze bzw. den Formkörper zu bilden, werden die Rohkörper zunächst in dem jeweiligen Matratzen- bzw. Formkörpervolumen entsprechende Blöcke geschnitten und danach Ausnehmungen in die gebildeten Rohkörpern eingeschnitten. Dies geschieht insbesondere durch Formschnitte oder Hinterschneidungen im Schaumstoffrohkörper. Die Bildung der Einschnitte bzw. Ausschnitte erfolgt durch Schneiden oder Sägen, die durch das Schaumstoffmaterial geführt werden. Dabei werden die Schlitze in dem Schaumstoffprodukt eingebracht. Die Schaumstoffausschnitte verbleiben dabei zumeist zunächst in dem Schlitz, was insbesondere durch die Ausformung der Hinterschneidungen bzw. Einschnitte bedingt ist. Herkömmlicherweise werden die Ausschnitte händisch aus den Rohmatratzen bzw. ausgeformten Schaumstoffprodukten entfernt. Der Stand der Technik sieht des Weiteren ein Absaugen bzw. Ausblasen der Ausschnitte aus den Schaumstoffprodukten vor. Es wird darüber hinaus vorgeschlagen, in einer Vorrichtung mittels einer Bürste oder eines Besens die Ausschnitte aus den Schlitzen auszukehren.

EP 2 149 436 zeigt eine Vorrichtung zum Entfernen eines Schaumstoff Ausschnittes aus einem Schlitz eines Schaumstoffproduktes, gemäß dem Oberbegriffs des Anspruchs 1.

Nachteilig an herkömmlichen Vorrichtungen zum Entfernen von Schaumstoffausschnitten ist, dass mit den bisher bekannten Vorrichtungen eine nur unzufriedenstellende Entfernung der Schaumstoffausschnitte aus den Schlitzen erfolgt. Insbesondere die mit rotierenden Besen ausgestatteten Vorrichtungen weisen den Nachteil auf, dass aufgrund einer hohen Anzahl von Borsten oder Austragselementen während der Rotation der Bürste ein Zurückschieben der Ausschnitte in den Spalt erfolgt. Dies hat den dem gewünschten entgegengesetzten Effekt. Die derart behandelten Schaumstoffprodukte müssen daher, um eine vollständige Reinigung zu erzielen, entweder händisch nachbearbeitet werden oder aber ein weiteres Mal die Reinigungsvorrichtung durchlaufen. Der nochmalige Durchlauf der Vorrichtung ist mit erhöhten Produktionskosten und verlängerten Produktionszeiten verbunden. Dies wiederum wirkt sich nachteilig auf die Effizienz der Vorrichtungen aus. Des Weiteren gelingt es oftmals nicht, eine ausreichende und Öffnung des die Ausschnitte beinhaltenden Schlitzes in den Schaumstoffprodukten durchzuführen, sodass hier innerhalb eines einzigen Bearbeitungsganges sämtliches Ausschnittsmaterial aus den Schlitzen zufriedenstellend entfernt werden kann.

Aufgabe der vorliegenden Erfindung ist es daher eine Vorrichtung zum Entfernen eines Schaumstoffausschnittes aus einem Schlitz, wie oben ausgeführt, derart weiterzubilden, dass die Nachteile des Standes der Technik vermieden werden und eine hocheffiziente und schnelle Reinigung eines Schaumstoffproduktes durchgeführt werden kann.

Diese Aufgabe wird durch die Merkmale des Anspruchs 1 gelöst.

Ein Vorteil der erfindungsgemäßen Vorrichtung ist, dass das zu reinigende Schaumstoffprodukt, gleich mit dem Eintritt in den Förderer, innerhalb dessen die Kontaktierung mit dem Entfernungswerkzeug zum Entfernen des Schaumstoffteiles aus dem Schlitz erfolgt, eine vorteilhafte Führung des Schaumstoffproduktes erfährt. So wird sichergestellt, dass das Schaumstoffprodukt sofort dem Kreisbahnabschnitt, der durch das zweite Fördermittel definiert ist, folgt und eine Aufbiegung sämtlicher Schlitze des Schaumstoffproduktes während der Bewegung in Förderrichtung durchgeführt wird. Das Entfernungswerkzeug kann somit den in dem optimal aufgebogenen Schlitz vorliegende Schaumstoffausschnitt erfassen und aus dem Schlitz entnehmen. Der Öffnungsvorgang der Schlitze erfolgt aufgrund der Führung mit Eintrag des Schaumstoffproduktes in den Förderer. Das heißt, auch Schlitze im Kopf- oder Anfangsbereich des Schaumstoffproduktes werden zufriedenstellend geöffnet und der dort vorliegende Schaumstoffausschnitt kann, nach Eingriff des Entfernungswerkzeuges bzw. Angriff des Entfernungswerkzeuges am Schaumstoffausschnitt, bereits beim ersten Durchlauf durch den Förderer aus diesem Schlitz entfernt werden.

Die Weite des Spaltes zwischen erstem und zweitem Fördermittel ist einstellbar. Die Einstellung erfolgt dabei in Abhängigkeit von der Dicke des Schaumstoffproduktes. Die Einstellbarkeit garantiert eine zufriedenstellende und vorteilhafte Erfassung und Führung des Schaumstoffproduktes, sodass dies sofort in der für den Reinigungsvorgang optimalen Lage im Förderer angeordnet ist. Als vorteilhaft erweist es sich in diesem Zusammenhang, wenn die Weite des Spaltes im Eintragsbereich geringer ist als im Austragsbereich. Der Förderer stellt so eine optimale Führung für das Schaumstoffprodukt zur Verfügung und garantiert eine genaue Führung des zu reinigenden Schaumstoffproduktes in Richtung des Entfernungswerkzeuges.

Um die Weite des Spaltes variieren zu können, ist vorgesehen, dass eine Verschiebung oder Verstellung des ersten bzw. zweiten Fördermittels bzw. von Teilen bzw. Teilbereichen des zweiten Fördermittels durchführbar bzw. einstellbar ist.

Als vorteilhaft erweist es sich in diesem Zusammenhang, wenn die Weite des Spaltes im Eintragsbereich geringer ist als im Austragsbereich. Der Förderer stellt so eine optimale Führung für das Schaumstoffprodukt zur Verfügung und garantiert eine genaue Führung des zu reinigenden Schaumstoffproduktes in Richtung des Entfernungswerkzeuges.

Eine als günstig angesehene Ausführungsform der erfindungsgemäßen Vorrichtung sieht vor, dass das erste Fördermittel um eine senkrecht zur Förderrichtung ausgerichtete erste Drehachse rotierend ausgebildet ist. Beim ersten Fördermittel handelt es sich insbesondere um eine einzelne, um die erste Drehachse rotierende Walze oder Rolle. Die erste Drehachse ist im Bereich des Mittelpunktes des durch den Kreisbahnabschnitt definierten Kreises gelagert. Um eine Variation des Spaltes zwischen erstem und zweitem Fördermittel durchführen zu können, ist die Drehachse verstellbar gelagert.

Das zweite Fördermittel ist durch eine Vielzahl einzelner, auf der Kreisbahn bzw. dem Kreisbahnabschnitt angeordneter Rollen oder Walzen gebildet. Diese Rollen weisen insbesondere eine senkrecht zur Förderrichtung ausgerichtete zweite Drehachsen auf. Die Drehachsen sind auf dem Umfang bzw. im Umfangsbereich des durch den Kreisbahnabschnitt definierten Kreises gelagert. Um eine Variation der Spaltbreite durchführen zu können, ist das zweite Fördermittel, das heißt die Gesamtheit der Rollen und Walzen, gegenüber dem ersten Fördermittel verstellbar angeordnet. Zusätzlich oder alternativ können auch einzelne Rollen oder Walzen des zweiten Fördermittels verstellbar angeordnet sein.

Das zweite Fördermittel weist wenigstens zwei, die rotierenden Rollen tragende Kreisbahnabschnitte auf und die Kreisbahnabschnitte sind um eine im Scheitelpunkt der Kreisbahn vorgesehene Schwenkachse relativ zueinander verschwenkbar ausgebildet. Diese Ausgestaltung der erfindungsgemäßen Vorrichtung erlaubt eine noch bessere Anpassung des Spaltes an unterschiedliche Dicken des zu reinigenden Schaumstoffproduktes. Die erfindungsgemäße Vorrichtung in dieser bevorzugten Ausführungsform eignet sich dann bspw. für die Bearbeitung von Schaumstoffprodukten mit Dicken von bspw. zwischen 100 und 500mm und größer.

Der Radius des durch die Kreisbahnabschnitte definierten Kreises ist durch Verschwenken der Kreisbahnabschnitte veränderbar.

In der zuvor beschriebenen vorteilhaften Weiterbildung der erfindungsgemäßen Vorrichtung wird es als günstig angesehen, wenn eine den Kreisbahnabschnitten zugeordnete, insbesondere an den Abschnittsenden angelenkte Scherenführung vorgesehen ist, um die Radiusänderung bzw. Verschwenkung der Kreisbahnabschnitte durchzuführen. Das Endgelenk der Scherenführung ist dabei bevorzugt relativ zur Schwenkachse verschiebbar angeordnet und ermöglicht so in einfacher Art und Weise eine Bewegung der Kreisbahnabschnitte.

Eine automatisches oder manuelle Verstellung wird insbesondere dadurch vereinfacht, wenn wenigstens ein den Kreisbahnabschnitten und/oder der Scherenführung zugeordnetes Stellelement für eine Verstellung der Position der Kreisbahnabschnitte vorgesehen ist. Bevorzugt ist dieses Stellelement als Linearantrieb, insbesondere als hydraulischer oder pneumatischer Stell- oder Hubzylinder ausgebildet. Eine Integration in die Maschinen- oder Anlagensteuerung kann so auf einfache Art und Weise realisiert werden.

Eine weitere bevorzugte Ausführungsform sieht vor, dass die Kreisbahnabschnitte nach Art einer die rotierenden Rollen tragenden Kette ausgebildet sind. Bevorzugt ist dabei eine die Rollenenden aufnehmende Führung vorgesehen. Durch Spannung bzw. Verstellung der Kettenglieder kann eine noch bessere Anpassung der Kreisbahnabschnitte an die Form, Dicke und/oder Größe des Schaumstoffproduktes erfolgen. Auch kann eine verbesserte Biegung des Schaumstoffproduktes und damit eine verbesserte Spalt-/Schlitzöffnung erzielt werden. Hierdurch wird das Reinigungsergebnis verbessert und die Effizienz der Vorrichtung erhöht.

Um eine Variation des Abstandes der einzelnen Walzen oder Rollen des zweiten Fördermittels zu ermöglichen, ist erfindungsgemäß vorgesehen, dass die Rollen oder Walzen bevorzugt relativ zueinander verstellbar angeordnet sind.

Als günstig wird angesehen, wenn erstes und zweites Fördermittel gesonderte Antriebe aufweisen. Selbstverständlich besteht auch die Möglichkeit, dass ein einziger Drehantrieb für sämtliche Wellen der Fördermittel vorgesehen ist und ein geeignetes Getriebe für die Einleitung des jeweils notwendigen Drehmomentes bzw. zur Definition der jeweils individuellen Rotationsgeschwindigkeit zur Verfügung gestellt wird. Als weitere Alternativlösung ist vorgesehen, dass jede der Rollen oder Walzen, sowohl des ersten als auch des zweiten Fördermittels, einen eigenen Drehantrieb aufweist. Als vorteilhaft wird es in diesem Zusammenhang angesehen, wenn die Rotationsgeschwindigkeit der einzelnen Rollen oder Walzen in Förderrichtung variabel einstellbar ist. Dies bedeutet, dass die im Eintragsbereich des Förderers angeordneten Rollen oder Walzen langsamer oder schneller angetrieben sind bzw. langsamer oder schneller rotieren als die Rollen oder Walzen im Austragsbereich des Förderers. Dies bewirkt, dass die Rotationsgeschwindigkeit der einzelnen Rollen oder Walzen in Förderrichtung zu- oder abnimmt. Ergebnis dieser unterschiedlichen Rotationsgeschwindigkeiten ist, dass neben der zur Öffnung der Schlitze im Schaumstoffprodukt notwendigen Biegebeanspruchung des Schaumstoffkörpers eine Zugspannung in Förderrichtung in den Schaumstoffkörper eingetragen wird. Bedingt hierdurch kommt es zu einer weiteren Aufweitung der Schlitze und zu einer verbesserten Eingriffsmöglichkeit des Entfernungswerkzeuges mit den Schaumstoffausschnitten. Vorteilhafterweise zeigt sich hierdurch ein wesentlich verbessertes Austrags- bzw. Entfernungsergebnis.

Ein für die Drehmomentübertragung in die Rollen oder Walzen notwendige Getriebe ist erfindungsgemäß in der Vorrichtung vorgesehen. Insbesondere ist dieses Getriebe als Zahnrad-, Riemen- oder Kettengetriebe ausgebildet.

Eine weitere Möglichkeit, die erfindungsgemäße Vorrichtung weiterzubilden wird dadurch angegeben, dass erstes und zweites Fördermittel unterschiedliche Fördergeschwindigkeiten zur Verfügung stellen. Beim Passieren der Fördermittel wird dadurch eine dem zweiten Fördermittel zugewandte Oberfläche des Schaumstoffproduktes zur weiteren Öffnung des Schlitzes mit einer Zugspannung beaufschlagt. Hierbei kommt es zur weitergehenden Öffnung des Schlitzes. Bedingt dadurch kann der Schaumstoffausschnitt aus dem Schaumstoffprodukt herausfallen. Es wird hierdurch allerdings auch erreicht, dass der Schaumstoffausschnitt zumindest teilweise in Richtung der Entfernungsrichtung aus dem Schlitz herausrutscht. Durch Angriff des Entfernungswerkzeuges erfolgt dann die vollständige Entnahme aus dem Schlitz.

Durch die erfindungsgemäße Ausgestaltung der Vorrichtung wird somit sichergestellt, dass unmittelbar mit Eintrag des Schaumstoffproduktes in den Förderer eine hochgenaue Zuführung zu den dort vorgesehenen Entfernungswerkzeugen erfolgt. Aufgrund der erfindungsgemäßen Ausgestaltung bzw. der unterschiedlichen Beaufschlagung mit verschiedenen, zunehmenden bzw. abnehmenden Rotationsgeschwindigkeiten, wird zudem eine weitaus bessere Aufweitung der Schlitze im Schaumstoffprodukt erreicht, was einen verbesserten Angriff des Entfernungswerkzeuges und eine zufriedenstellendere Reinigung der Schlitze des Schaumstoffproduktes ermöglicht. Aufgrund dessen, dass die Ausschnitte bereits nach einem Durchlauf des Förderers und einem einzigen Reinigungsarbeitsgang vollständig entfernt werden, kann die Schaumstoffreinigung bzw. Matratzenreinigung wesentlich schneller und damit effizienter und kostengünstiger erfolgen. Die Taktzeiten bei der Matratzenreinigung können somit besser auf die des vorgelagerten Rohmaterialzuschnittes abgestimmt werden. Ergebnis ist eine Effizienz- und Geschwindigkeitssteigerung sowie Taktzeitverkürzung bei der Matratzenproduktion, die mit herkömmlichen Vorrichtungen bisher nicht erreicht wurde.

Die Vorrichtung zum Entfernen eines Schaumstoffausschnittes weist ein Entfernungswerkzeug auf. Diesem kommt auch eine eigenständige erfinderische Bedeutung zu. Das Entfernungswerkzeug ist zwischen den Rollen oder Walzen des zweiten Fördermittels angeordnet. Dabei wird es als günstig angesehen, wenn das Entfernungswerkzeug relativ zu einem Scheitelpunkt des zweiten Fördermittels gesehen versetzt, insbesondere dem Scheitelpunkt vor- oder nachgelagert, angeordnet ist. Diese Ausführungsform der erfindungsgemäßen Vorrichtung bedingt, dass eine vollständige Entfernung sämtlicher Schaumstoffausschnitte aus dem Schaumstoffprodukt durchgeführt wird. Dadurch, dass nach Passieren des Scheitelpunktes des durch das zweite Fördermittel beschriebenen Kreisbahnschnittes eine Biegung des Schaumstoffproduktes gewährleistet ist, ermöglicht die dem Scheitelpunkt nachgeordnete Anordnung des Entfernungswerkzeuges eine Entnahme der Schaumstoffausschnitte auch aus den im Anfangs- oder Kopfbereich des Schaumstoffproduktes vorgesehenen Schlitzen. Es muss daher keine Drehung des Schaumstoffproduktes um 180° erfolgen, um auch diese Schlitze bzw. die dort angeordneten Schaumstoffausschnitte zu entfernen.

Um auf verschiedene Ausformungen und Schlitztiefen reagieren zu können, sieht eine Ausführungsform der Vorrichtung vor, dass das Entfernungswerkzeug relativ zum ersten Fördermittel variabel beabstandbar angeordnet ist. Die Anordnung bzw. Einstellung oder Beabstandung des Entfernungswerkzeuges erfolgt auch in Abhängigkeit von der Dicke des zu reinigenden Schaumstoffproduktes.

Das Entfernungswerkzeug ist dabei bevorzugt relativ zum Kreisbahnabschnitt zurückgesetzt, insbesondere zu den Fördermitteln radial beabstandet angeordnet. Durch diese Anordnung des Entfernungswerkzeuges erfolgt ein optimaler Eingriff in die im Schaumstoffprodukt vorgesehenen Schlitze sowie ein Angriff an den in den Schlitzen angeordneten Schaumstoffausschnitten und verbessert somit wesentlich das Reinigungsergebnis. Das Entfernungswerkzeug ist günstiger Weise bewegbar, insbesondere um eine dritte, senkrecht zur Förderrichtung ausgerichtete Drehachse rotierend ausgebildet. Als Weiterbildung der Vorrichtung ist vorgesehen, dass das Entfernungswerkzeug bzw. dessen um die Drehachse rotierende Welle einen eigenen Antrieb aufweist, damit die Rotationsgeschwindigkeit des Entfernungswerkzeuges einstellbar ist. Selbstverständlich besteht auch die Möglichkeit, dass durch eine geeignete Getriebeübersetzung ein Drehmomenteintrag in die Welle des Entfernungswerkzeuges erfolgt, sodass insgesamt nur ein einziger Antrieb für die gesamte Vorrichtung bzw. den Förderer und das Entfernungswerkzeug vorgesehen werden muss.

Als günstig wird angesehen, wenn das Entfernungswerkzeug eine Welle mit wenigstens einem auf der Welle angeordneten Austragselement oder Austragselementpaar aufweist. Um die Verstellbarkeit des Entfernungswerkzeuges sicherzustellen, ist die Welle bevorzugt in einer Langlochführung gehaltert.

Eine als günstig angesehene Ausführungsform der erfindungsgemäßen Vorrichtung sieht vor, dass die an dem Entfernungswerkzeug bzw. der Welle des Entfernungswerkzeuges angeordneten Austragselemente bzw. das wenigstens eine Austragselementpaar diametral zur Wellenachse angeordnet sind. Das Entfernungswerkzeug weist somit insgesamt nur zwei Austragselemente auf. Diese erstrecken sich radial vom Wellenzentrum weg.

Diese als vorteilhaft angesehene Ausführungsform des Entfernungswerkzeuges hat den Vorteil, dass durch das Entfernungswerkzeug keine kontinuierliche Beaufschlagung der Schaumstoffteile erfolgt. Nach einem ersten Angriff eines der Austragselemente am Schaumstoffteil erhält das Schaumstoffteil einen Bewegungsimpuls. Zwischen dem Angriff des zweiten Austragselementes erfolgt ein Abbruch der Beaufschlagung des Schaumstoffteiles. Bedingt durch den durch das erste Austragselement vermittelten Impuls bewegt sich der Schaumstoffausschnitt bereits ganz oder zumindest teilweise aus dem Schlitz des Schaumstoffproduktes heraus und steht gegenüber diesem vor. An dem vorstehenden Bereich oder Abschnitt des Schaumstoffausschnittes kann nun, nach einer weitergehenden Drehung des Entfernungswerkzeuges um bevorzugt 180°, das zweite Austragselement angreifen und den Schaumstoffausschnitt somit vollständig aus dem Schlitz entfernen. Anders als bei herkömmlichen Matratzenreinigungsvorrichtungen, die mit einer rotierenden Bürste oder mehreren Austragselementen, die um die Welle herum angeordnet sind, die Entfernung der Schaumstoffausschnitte vornehmen, kommt es hierbei nicht zu einem Zurückschieben des Schaumstoffausschnittes durch die schnell oder dauerhaft den Schaumstoffausschnitt beaufschlagenden Austragselemente des Entfernungswerkzeuges. Überraschend hat sich gezeigt, dass sich mit der beschriebenen Ausgestaltung des Entfernungswerkzeuges ein wesentlich verbessertes Reinigungsergebnis bzw. Entfernungsergebnis erzielen lässt. Des Weiteren werden mit der erfindungsgemäßen Anordnung die Schnitt- bzw. Schlitzkanten nicht dauerhaft beaufschlagt und somit Beschädigungen vermieden.

Die Austragselemente selbst sind als Bürsten, Besen, Leisten, Paddeln, Gebläse, Greifer, Düse oder Kombinationen daraus ausgebildet. Alternativ weisen die Austragselemente auch jeweils wenigstens eine Borstenreihe auf. Das Austragselement greift bevorzugt in den geöffneten Schlitz ein, greift den Schaumstoffausschnitt und entfernt diesen ganz oder teilweise aus dem Schlitz. Bei einem ersten Eingriff wird, wie bereits ausgeführt, eine nur teilweise Entnahme des Schaumstoffausschnittes aus dem Schlitz durchgeführt. Erst durch Angriff des zweiten Austragselementes erfolgt eine vollständige Entfernung des Schaumstoffausschnittes aus dem Schlitz. Selbstverständlich kann auch der Fall eintreten, dass der Schaumstoffausschnitt bereits teilweise aus dem Schlitz herausragt, bspw. bedingt durch die vorteilhafte Ausgestaltung des Förderers, der eine starke Aufweitung des Schlitzes ermöglicht. In diesem Fall reicht die einmalige Beaufschlagung durch eines der Austragselemente aus, um den Schaumstoffausschnitt vollständig aus dem Schlitz zu entfernen.

Als vorteilhaft wird angesehen, wenn eine Rotationsgeschwindigkeit des Entfernungswerkzeuges derart einstellbar ist, dass der Schaumstoffausschnitt zwei- oder mehrfach durch die Austragselemente bzw. durch das Austragselementpaar beaufschlagbar ist. Obgleich eine einmalige Beaufschlagung durch beide Austragselemente des Austragselementpaares ausreicht, um die Schaumstoffausschnitte aus dem Schlitz zu entfernen, kann insbesondere bei besonders komplexen Schlitzgeometrien mehrfache Beaufschlagung des Schaumstoffteiles notwendig sein, um eine vollständige Reinigung des Schlitzes zu gewährleisten.

Eine als vorteilhaft angesehene Weiterbildung der Vorrichtung bzw. des Entfernungswerkzeuges sieht vor, dass dieses zwei- oder mehr in axialer Richtung der Welle getrennte Austragselemente oder Austragselementpaare aufweist. Hierdurch kann der Schaumstoffausschnitt an mehreren unterschiedlichen Positionen während des Passierens des Entfernungswerkzeuges durch die Austragselemente beaufschlagt werden. Insgesamt kann somit ein schnellerer Durchlauf des Schaumstoffproduktes durch die Fördervorrichtung bzw. vorbei am Entfernungswerkzeug erfolgen.

Das Entfernungswerkzeug zeichnet sich vorteilhaft dadurch aus, dass zwischen der Welle und den Austragselementen ein Träger oder eine Halterung für die Austragselemente bzw. die Bürsten, Besen, Leisten, Paddeln, Gebläse, Greifer, Düse oder Kombinationen daraus oder die wenigstens eine Borstenreihe vorgesehen ist. Die Träger oder Halterungen oder aber die Austragselemente sind bevorzugt lösbar oder fest mit der Welle, die einen runden oder quadratischen Querschnitt aufweisen kann, verbunden. Als vorteilhaft erweist sich insbesondere eine Verschraubung, Verklemmung, Verrastung, Vernietung oder Verschweißung der Austragselemente mit der Welle. Alternativ können diese auch in die Welle eingeformt werden.

Eine weitere als vorteilhaft angesehene Ausführungsform sieht vor, dass zwei oder mehr Austragselemente oder Austragselementpaare, schrauben- oder wendelartig an der oder um die Welle herum angeordnet sind. Auch hierdurch wird, wie durch die Anordnung mehrerer Austragselementabschnitte, eine asymmetrische Beaufschlagung des Schaumstoffausschnittes bzw. ein asymmetrischer Eingriff der Austragselemente in den Schlitz gewährleistet. Es zeigt sich hierbei, verglichen mit einer Anordnung mehrerer sich radial von einem Zentrum wegerstreckender Borsten oder Bürsten, eine wesentlich verbesserte Entfernung der Schaumstoffausschnitte aus sämtlichen Schlitzen.

Eine vorteilhafte Weiterbildung der erfindungsgemäßen Vorrichtung sieht vor, dass der Förderer eine Positionserfassungsvorrichtung, insbesondere wenigstens einen in dem Austrags- oder Eintragsbereich vorgesehenen Sensor, aufweist. Dieser Sensor ist dabei bevorzugt als Taster oder als Lichtschranke ausgebildet. Der Sensor dient zur Überwachung der Position bzw. Positionsänderung des Schaumstoffproduktes. Es kann somit im Förderer erfasst werden, wenn ein Schaumstoffprodukt in diesen eingetragen wird. Zugleich wird erfasst, wenn die vordere Abschlussfläche des Schaumstoffproduktes den Austragsbereich bzw. das Ende des Förderers erreicht hat. Ebenfalls ermittelt wird das vollständige Passieren des Schaumstoffproduktes durch den Förderer.

Das Entfernungswerkzeug ist bevorzugt bewegbar, insbesondere um eine senkrecht zur Förderrichtung ausgerichtete Drehachse rotierend ausgebildet. Um beispielsweise auf verschiedene Materialien, insbesondere Schaumstoffe eingehen zu können, erweist es sich als vorteilhaft, wenn die eine Rotationsgeschwindigkeit des Entfernungswerkzeuges einstellbar ist.

In einer günstigen Ausführungsform der Erfindung ist das Entfernungswerkzeug derart positionierbar, dass ein äußeres Ende des wenigstens einen Austragselementes die Oberfläche des Schaumstoffproduktes kontaktiert, jedoch nicht in die Schnitte bzw. Schlitze eingreift. Schwerkraftbeaufschlagt und bedingt durch die Biegung des Schaumstoffmaterials bewegen sich die Ausschnitte von selbst teilweise aus dem Schlitz heraus und stehen gegenüber der Oberfläche des Schaumstoffproduktes vor.

Dabei können die Ausschnitte von dem äußeren Ende des wenigstens einen Austragselementes erfasst und entfernt werden, ohne dass ein Eingriff in das Schaumstoffprodukt stattfindet.

Eine für den Durchlauf des Schaumstoffproduktes durch den Förderer vorteilhafte Ausgestaltung der Vorrichtung sieht vor, dass die Fördermittel eine reibungserhöhende Beschichtung aufweisen. Auch die Austragselement des Entfernungswerkzeuges können eine reibungserhöhende Beschichtung aufweisen oder aus einem haftenden oder elastischen Material, bspw. aus Gummi o. dgl. gebildet sein. Gleichermaßen von der Erfindung umfasst ist ein Verfahren zur Entfernung von Schaumstoffausschnitten aus den Schlitzen eines Schaumstoffproduktes, insbesondere einer Matratze, mit den Merkmalen des Anspruchs 11. Das Verfahren sieht vor, dass zunächst ein Einführen des Schaumstoffproduktes in einen zwischen einem ersten und einem zweiten Fördermittel des Förderers vorgesehenen Spalt durchgeführt wird. Das Einführen des Schaumstoffproduktes in den Förderer dient zur Bewegung des Schaumstoffproduktes in eine Förderrichtung. Die Fördermittel oder zumindest das zweite Fördermittel definiert durch die Anordnung seiner Elemente einen Kreisbahnabschnitt. Entlang dieses Kreisbahnabschnittes wird das Schaumstoffprodukt bewegt, während es den Förderer durchläuft. Aufgrund der Geometrie des Kreisbahnabschnittes erfolgt ein Biegen des Schaumstoffproduktes. Dabei kommt es zur Öffnung eines einen Schaumstoffausschnitt beinhaltenden Schlitzes des Schaumstoffkörpers. Im weiteren Verlauf bzw. während des Durchlaufs des Förderers erfolgt die Entfernung des Schaumstoffausschnittes aus dem geöffneten Schlitz entweder schwerkraftbeaufschlagt und/oder durch ein mit dem Schaumstoffausschnitt in Eingriff bringbares Entfernungswerkzeug. Nach Durchlauf des Förderers wird das Schaumstoffprodukt aus dem Förderer über einen Austragsbereich ausgefördert.

Das erfindungsgemäße Verfahren zeichnet sich dadurch aus, dass durch eine in Förderrichtung zunehmende Fördergeschwindigkeit des zweiten Fördermittels eine Beaufschlagung des bereits biegebeaufschlagten Schaumstoffproduktes mit einer Zugspannung in Förderrichtung erfolgt. Durch den Eintrag der Zugspannung kommt es zu einer weiteren Öffnung des Schlitzes, was das Herausfallen bzw. -rutschen des Schaumstoffausschnittes aus dem Schlitz vereinfacht und zugleich einen verbesserten Eingriff des Entfernungswerkzeuges in den Schlitz bzw. mit dem Schaumstoffausschnitt ermöglicht.

Erfindungsgemäß ist vorgesehen, dass während einer Bewegung des Schaumstoffproduktes eine einmalige, mehrfache oder kontinuierliche Positionserfassung des Schaumstoffproduktes durchgeführt wird.

Bei Erreichen einer in Förderrichtung ersten definierten Position des Schaumstoffproduktes bzw. dessen Kopf- oder Anfangsbereiches bzw. Frontkante im Förderer, wird eine Bewegung entgegen der Förderrichtung initiiert. Es erfolgt dann eine Bewegung entgegen der Förderrichtung, bis das Schaumstoffprodukt eine zweite definierte Position im Förderer erreicht. Die Position wird ebenfalls über die im Förderer vorgesehenen Positionssensoren ermittelt. Bei Erreichen der zweiten definierten Position wird die Bewegungsrichtung des Schaumstoffproduktes erneut umgekehrt, sodass eine Bewegung in die ursprüngliche Förderrichtung erfolgt. Vorteil dieses Verfahrensschrittes ist, dass eine optimale Positionierung des Schaumstoffproduktes bzw. der Schlitze im Förderer und relativ zum Entfernungswerkzeug durchgeführt werden kann. Zudem wird eine verbesserte Biegung des Schaumstoffkörpers erreicht, da dieser genauer in dem Fördermittel positioniert ist. Im Ergebnis lässt sich somit auch für die in Förderrichtung gesehen ersten Schlitzen des Schaumstoffproduktes eine optimale Aufbiegung realisieren, sodass das Entfernungswerkzeug bzw. die Austragselemente auch hier in zufriedenstellender Art und Weise eingreifen können, um die im Schlitz angeordneten Schaumstoffausschnitte zu entfernen. Das erfindungsgemäße Verfahren macht somit eine händische Nachbearbeitung, insbesondere der Schlitze des Schaumstoffteiles, die im Anfangs- und Endbereich des Schaumstoffproduktes angeordnet sind, überflüssig und erspart somit Kosten und Zeit bei der Herstellung bzw. Reinigung der Schaumstoffprodukte. Auch kann in der Regel auf einen nochmaligen Durchlauf der Vorrichtung des ggfs. um 90 oder 180° gedrehten Schaumstoffproduktes verzichtet werden.

Als vorteilhaft wird angesehen, wenn die Weite des zwischen den Fördermitteln vorgesehenen Spaltes einstellbar ist. Die Weite wird dabei insbesondere in Abhängigkeit von der Dicke des Schaumstoffproduktes eingestellt und die Einstellung kann entweder automatisch oder manuell erfolgen. Als vorteilhaft wird angesehen, wenn die Weite im Eintragsbereich geringer eingestellt ist als im Austragsbereich. Dadurch, dass das Schaumstoffprodukt zunächst durch einen im Vergleich engeren Bereich des Förderers gefördert werden muss, kommt es zu einer genaueren Positionierung relativ zu den jeweiligen Fördermitteln oder dem oder den Entfernungswerkzeugen.

Um die Einstellung der Weite durchzuführen, wird es als günstig angesehen, wenn das erste und/oder zweite Fördermittel versetzt, verschoben oder verschwenkt wird/werden. Die Position des Entfernungswerkzeuges relativ zum Förderer bzw. dem geförderten Schaumstoffprodukt ist hierbei einstellbar. Durch die Einstellung der Position des Entfernungswerkzeuges kann die Eingriffstiefe in dem geöffneten Spalt definiert werden. Hierbei wird insbesondere die Tiefe des Eintauchens des Austragselementes bzw. der Austragselemente, die am Entfernungswerkzeug vorgesehen sind, in den geöffneten Schlitz eingestellt. Das Entfernungswerkzeug muss hierzu nicht zwingend in den Schlitz eingreifen. Es reicht bereits aus, wenn das Entfernungswerkzeug derart positioniert ist, dass das vordere Ende der Austragselemente über die Oberfläche des Schaumstoffproduktes streichen und auf vorstehende Schaumstoffteile einwirken um diese vollends aus dem Schlitz zu entfernen.

Das zweite Fördermittel weist bevorzugt eine Vielzahl einzelner auf dem Kreisbahnabschnitt angeordneter rotierender Rollen oder Walzen auf. Die Rotationsgeschwindigkeit der einzelnen Rollen oder Walzen nimmt dabei in Förderrichtung zu oder ab. Die Rollen oder Walzen verfügen dabei über gesonderte oder einen gemeinsamen Drehantrieb. Die unterschiedlichen Rotationsgeschwindigkeiten werden hierbei entweder über die gesonderten Drehantriebe oder aber eigene geeignete Getriebeanordnungen eingestellt.

Ein weiterer als vorteilhaft angesehener Verfahrensschritt sieht vor, dass nach Austrag des Schaumstoffproduktes aus dem Förderer ein Wenden des Schaumstoffkörpers und/oder eine Drehung um 90° oder 180° durchgeführt wird. Nach dieser Drehung bzw. Wendung wird das Schaumstoffprodukt erneut in den Förderer eingetragen, um entweder noch in den Schlitzen vorhandene Schaumstoffausschnitte zu entfernen oder aber um eine Entfernung von Schaumstoffausschnitten aus den Schlitzen in einer zweiten Oberfläche des Schaumstoffproduktes, sofern vorhanden, durchzuführen.

Die Erfindung wird schematisch in den nachfolgend beschriebenen Zeichnungen dargestellt. Es zeigen:
- Fig. 1a: eine schematische Darstellung einer nicht erfin-dungsgemäßen Vorrichtung in der Draufsicht,
- Fig. 1b: eine bevorzugte Ausführungsform der nicht er-findungsgemäßen Vorrichtung in Seitenansicht,
- Fig. 2: eine schematische Darstellung des Förderers in Seitenansicht,
- Fig. 3: eine Ausführungsform des Förderers in perspektivischer Darstellung,
- Fig. 4: eine schematische Darstellung einer bevorzugten Ausführungsform des Entfernungswerkzeuges in perspektivischer Darstellung,
- Fig. 5a, b: eine schematische Darstellung einer bevorzugten Ausführungsform des Förderers in Seitenansicht.

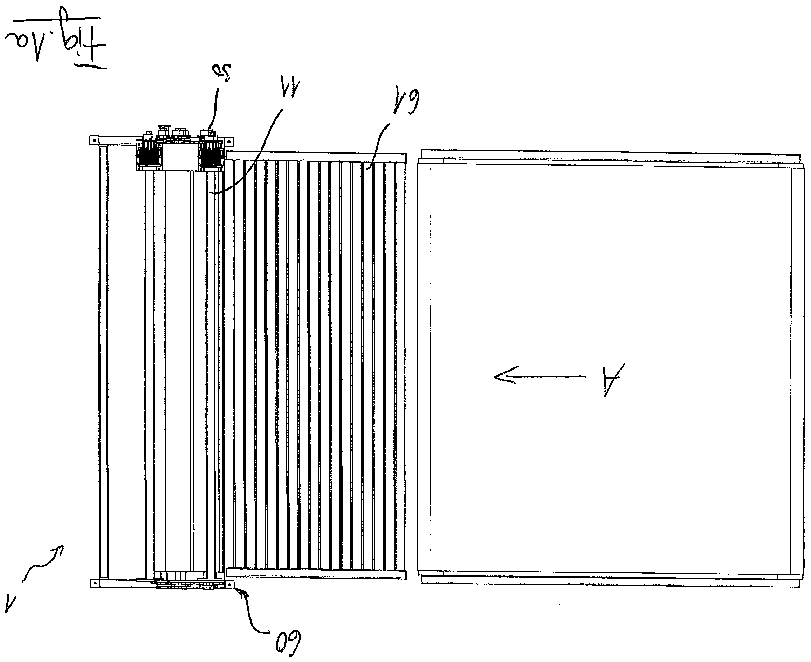

In Fig. 1a wird eine nicht erfindungsgemäße Vorrichtung 1 zum Entfernen eines Schaumstoffausschnittes aus einem Schlitz eines Schaumstoffproduktes in der Draufsicht dargestellt. Erkennbar ist ein Zuführbereich 60, der über einen Rollengang 61 die vorkonfektionierten Schaumstoffprodukte (nicht dargestellt), in die bereits die Schlitze eingebracht sind, in denen sich noch die ausgeschnittenen Schaumstoffausschnitte befinden, zu der eigentlichen Vorrichtung 1 zum Entfernen der Schaumstoffausschnitte aus den Schlitzen des Schaumstoffproduktes einbringt. Die Vorrichtung 1 selbst verfügt über ein erstes Fördermittel 6 mit einer durch einen Antrieb 30 angetriebenen Rolle 11, sowie über auf einer Kreisbahn 8 um die Rolle 11 herum angeordnete weitere Rollen 12, die das zweite Fördermittel 7 zur Verfügung stellen. Das zu reinigende Schaumstoffprodukt wird in Förderrichtung A in die Vorrichtung 1 eingetragen und durchläuft diese dann. Die Bewegung in Förderrichtung A wird durch die angetriebenen Fördermittel 6, 7 des Förderers 2 gewährleistet.

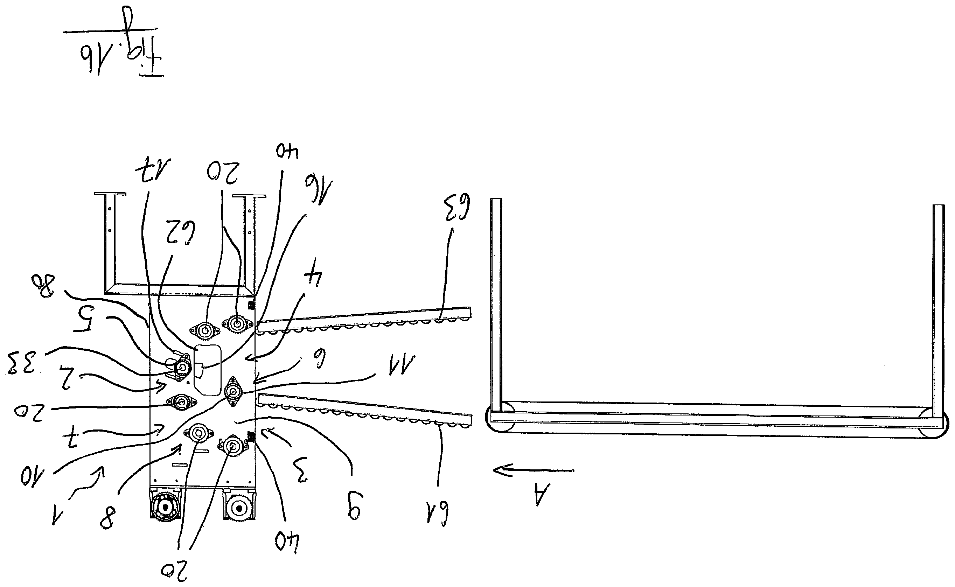

In Fig. 1b ist die Vorrichtung 1 in Seitenansicht dargestellt. Erkennbar ist hier der Rollengang 61, der zur Vorrichtung 1 hin geneigt angeordnet ist und das Schaumstoffprodukt zu einem Eintragsbereich 3 hin zuführt. Im Eintragsbereich 3 befinden sich die beiden Fördermittel 6, 7 des Förderers 2 zueinander beabstandet. Der Abstand ist dabei derart einstellbar, dass die Weite des sich zwischen den Fördermitteln 6, 7 ergebenden Spaltes 9 der Dicke des Schaumstoffproduktes entspricht. Das Schaumstoffprodukt wird durch die Fördermittel 6, 7 erfasst und in den Förderer 2 eingetragen. Aufgrund der Anordnung der Elemente des zweiten Fördermittels 7 ergibt sich hier ein Kreisbahnabschnitt 8. Das in den Spalt 9 eingeführte und von den Fördermitteln 6, 7 erfasste Schaumstoffprodukt wird, dem Kreisbahnabschnitt 8 folgend, in Förderrichtung A bewegt und dabei durch den zugleich als Biegevorrichtung dienenden Förderer 2 in Richtung des Austragsbereiches 4 abgebogen. Bedingt durch diesen Biegevorgang kommt es zur Öffnung des Schlitzes bzw. der Schlitze im Schaumstoffprodukt, sodass das Entfernungswerkzeug 5 die Schaumstoffausschnitte problemlos aus dem Schlitz entfernen kann. Durch den in Fig. 1b gezeigten Ausschnitt 62 in der seitlichen Begrenzungswand 80 der Vorrichtung 1 ist eines von zwei Austragselementen 16 des Entfernungswerkzeuges 5 erkennbar. Das in den Förderer 2 eingetragene Schaumstoffprodukt wird an diesem Entfernungswerkzeug 5 mit geöffneten Schlitz entlang geführt. Das Austragselement 16 beaufschlagt dabei den Schaumstoffausschnitt und entnimmt diesen ganz oder teilweise aus dem Schlitz. Die auf dem Kreisbahnabschnitt 8 angeordneten Elemente des Fördermittels 6, bei denen es sich im Ausführungsbeispiel der Fig. 1b um Drehachsen 20 rotierende Rollen 12 handelt, weisen dabei eine in Richtung des Austragsbereiches 4 zunehmende Rotationsgeschwindigkeit auf. Hierdurch wird eine Zugspannung in das Schaumstoffprodukt eingetragen, was zu einer weitergehenden Öffnung der Schlitze führt. Hierdurch wird ein noch besserer Angriff der Austragselemente 16 des Entfernungswerkzeuges 5 gewährleistet. Die Vorrichtung 1, wie in Fig. 1b dargestellt, weist sowohl im Eintragsbereich 3 als auch im Austragsbereich 4 einen Sensor 40 auf, über den die Positionierung des Schaumstoffproduktes überwacht werden kann. Die rotierende Rolle 11 des ersten Fördermittels 6 ist vom Mittelpunkt des durch den Kreisbahnabschnitt 8 definierten Kreises gesehen radial auf die erste Rolle 12 des zweiten Fördermittels 7 versetzt bzw. versetzbar. Hierdurch kann eine Einstellung des Spaltes 9 erfolgen. Ebenfalls verstellbar angeordnet ist das Entfernungswerkzeug 5. Hierzu ist eine Langlochführung 17 vorgesehen. Dem Austragsbereich 4 nachgeordnet ist ein weiterer Rollengang 63 vorgesehen, über den das bearbeitete Schaumstoffprodukt dem nachgeordneten Vorrichtungsteil (nicht dargestellt) zugeführt werden kann. Die Drehachsen 10, 20 der ersten und zweiten Fördermittel 6, 7 sind in einer seitlichen Begrenzungswand 80 der Vorrichtung 1 gehalten.

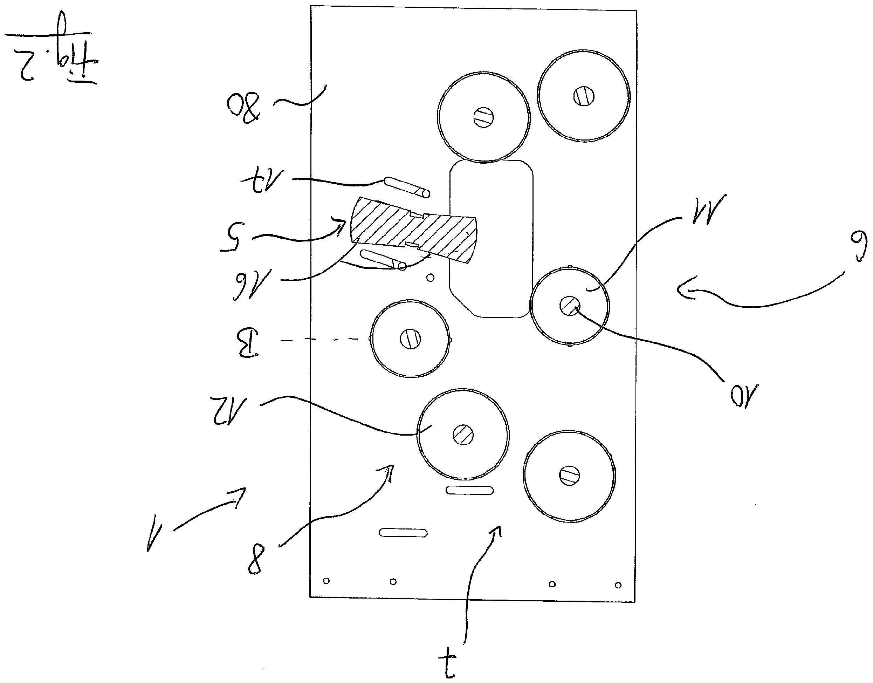

Fig. 2 zeigt die Vorrichtung 1 bzw. den Teil, der die Enden der Wellen der Rollen 11, 12 von erstem und zweitem Fördermittel 6, 7 aufnimmt, in schematischer Darstellung. Die Rollen 12 des zweiten Fördermittels 7 definieren dabei einen Kreisbahnabschnitt 8. Im Bereich des Mittelpunktes des durch den Kreisbahnabschnitt 8 definierten Kreises ist das erste Fördermittel 6 bzw. die um die erste Drehachse 10 rotierende Walze 11 angeordnet. Im Scheitelpunkt B des Kreisbahnabschnittes 8 nachgeordnet ist das Entfernungswerkzeug 5 angeordnet. Eine Verstellbarkeit des Entfernungswerkzeuges 5 ist durch die Halterung in einer Langlochführung 17, die in der seitlichen Begrenzungswand 80 vorgesehen ist gewährleistet. Hierdurch kann die Eingriffstiefe der Austragselemente 16 des Entfernungswerkzeuges 5 in den in dem Schaumstoffprodukt gebildeten Schlitz eingestellt werden. Das Entfernungswerkzeug 5 weist insgesamt zwei Austragselemente 16 auf, die sich radial von einem Wellenmittelpunkt des Entfernungswerkzeuges 5 weg erstrecken und diametral an der Welle angeordnet sind. Die Schaumstoffausschnitte im Schlitz des Schaumstoffproduktes werden somit nach jeweils einer Drehung des Entfernungswerkzeuges um 180° durch die Austragselemente 16 beaufschlagt. Es erfolgt somit keine kontinuierliche Beaufschlagung der Schaumstoffausschnitte durch die Austragselemente 16. Die Austragselemente 16 tragen jeweils einen Impuls in den Schaumstoffausschnitt ein und bewirken somit dessen Bewegung aus dem Schlitz heraus. Die Rotationsgeschwindigkeit des Entfernungswerkzeuges 5 ist dabei einstellbar.

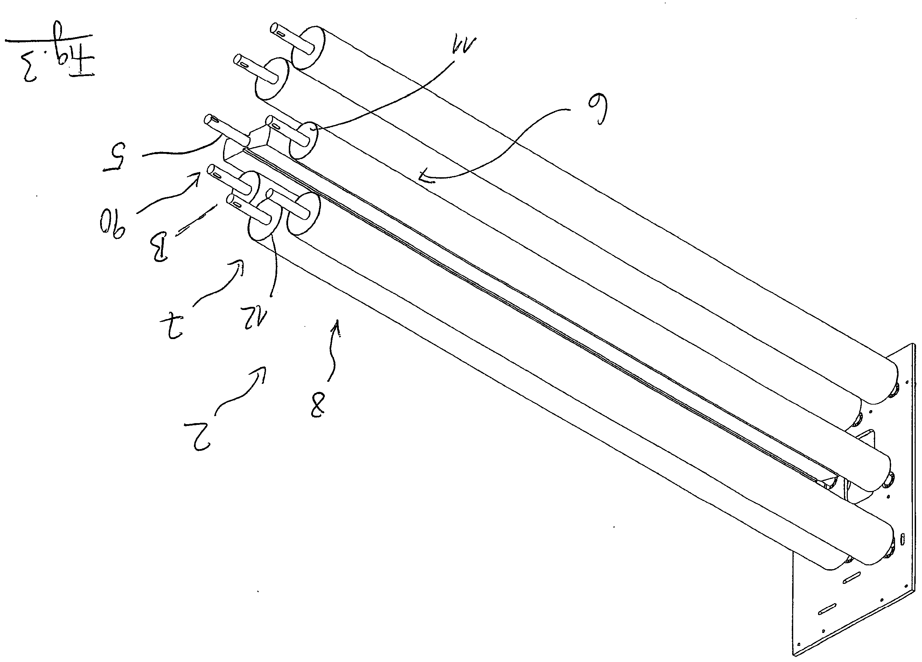

Fig. 3 zeigt den Förderer 2 in perspektivischer Darstellung. Zu erkennen sind hierbei die freien Wellenenden 90 der die Fördermittel 6, 7 bildenden Rollen 11, 12. Zwischen den Rollen 12 des zweiten Fördermittels 7 ist das Entfernungswerkzeug 5 ebenfalls rotierbar angeordnet. Das Entfernungswerkzeug 5 ist im Scheitelpunkt B des Kreisbahnabschnittes, der durch die Anordnung der Elemente des zweiten Fördermittels 7, das heißt der Rollen 12, definiert ist, angeordnet. Hierdurch wird erreicht, dass ein in den Förderer 2 eingetragenes Schaumstoffprodukt bzw. die dort vorgesehenen und mit den zu entfernenden Schaumstoffausschnitten gefüllten Schlitze vollständig geöffnet sind, wenn die Schlitze bzw. Schaumstoffausschnitte das Entfernungswerkzeug 5 passieren. Wäre das Entfernungswerkzeug 5 unmittelbar im Scheitelpunkt B des Kreisbahnabschnittes 8 festgelegt ist, könnte eine vollständige Öffnung der Schlitze nicht gewährleistet werden. Dies hätte nachteilige Auswirkungen auf das Reinigungsergebnis.

Die Rollen 11, 12 bzw. die Austragselemente 16 weisen in einer Weiterbildung eine reibungserhöhende Beschichtung auf, wodurch eine noch bessere und noch zügigere Ergreifung des Schaumstoffproduktes sichergestellt ist und die Bewegung durch die Vorrichtung 1 weiter beschleunigt und verbessert wird.

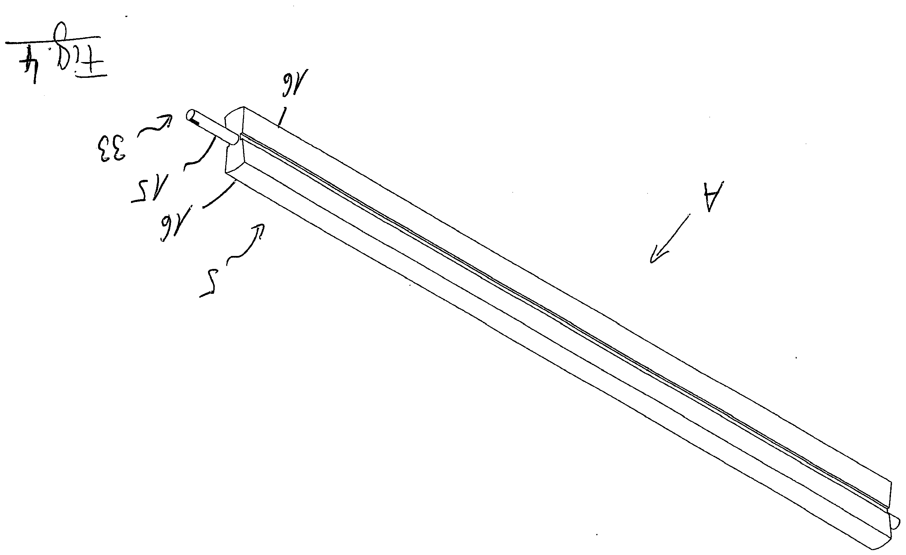

Fig. 4 zeigt eine bevorzugte Ausführungsform eines Entfernungswerkzeuges 5, wie dies in einer Matratzenreinigungsvorrichtung bzw. einer Vorrichtung 1 zum Entfernen eines Schaumstoffausschnittes aus einem Schlitz eines Schaumstoffproduktes verwendet wird. Das Entfernungswerkzeug 5 weist eine Welle 15 auf. Das Entfernungswerkzeug 5 selbst ist um eine Drehachse 33 rotierend, diese Drehachse 33 ist senkrecht zu einer Förderrichtung A des Schaumstoffproduktes ausgerichtet. Das Entfernungswerkzeug 5 weist insgesamt zwei Austragselemente 16 auf, die sich radial von der Welle 15 erstrecken und an der Welle 15 diametral angeordnet sind. Das Entfernungswerkzeug 5 weist insgesamt nur zwei Austragselemente 16, das heißt ein Austragselementpaar, auf. Dies bedeutet, dass zwischen der Beaufschlagung der Schaumstoffausschnitte bzw. dem Eingriff der Austragselemente in den den Schaumstoffausschnitt beinhaltenden Schlitz eine Drehung des Entfernungswerkzeuges 5 um 180° erfolgen muss. Es findet somit keine kontinuierliche Beaufschlagung des Schaumstoffausschnittes durch die Austragselemente 16 statt. Vielmehr geben die Austragselemente 16 jeweils einen Impuls an den Schaumstoffausschnitt weiter, das heißt, der Schaumstoffausschnitt wird schlagend durch die Austragselemente 16 beaufschlagt. Hierzu kommt es zu einem ruck- oder abschnittsweisen Austrag des Schaumstoffausschnittes aus dem Schlitz. Bei Beaufschlagung durch ein erstes Austragselement 16 wird ein Teil des Schaumstoffausschnittes aus dem Schlitz gezogen. Eine nachfolgende Drehung des Entfernungswerkzeuges 5 um 180° bedeutet eine kurzzeitige Beendigung der Beaufschlagung. Hierbei kann bereits, bedingt durch den Impuls durch das erste Austragselement 16, ein Herausrutschen, unter Umständen auch unterstützt durch die auf den Schaumstoffausschnitt wirkende Schwerkraft, aus dem geöffneten Schlitz des Schaumstoffproduktes erfolgen. Auf den abschnittsweise aus dem Schlitz hervorstehende Schaumstoffausschnitt trifft das zweite Austragselement 16 des Entfernungswerkzeuges 5 wiederum schlagend auf und entnimmt somit den Schaumstoffausschnitt vollständig aus dem Schlitz des Schaumstoffproduktes. Anders als bei um die gesamte Welle 15 angeordnete Austragselemente 16, wie bspw. Borsten oder eine Vielzahl von Leisten, wird durch die Rotation des Entfernungswerkzeuges 5 nicht ein Zurückschieben des Schaumstoffausschnittes in den Schlitz durchgeführt. Ergebnis des Reinigungsvorganges ist somit eine vollständige Entfernung des Schaumstoffausschnittes bereits nach einem Durchlauf einer Vorrichtung 1 zum Entfernen der Schaumstoffausschnitte aus dem Schlitz eines Schaumstoffproduktes. Die Rotationsgeschwindigkeit des Entfernungswerkzeuges 5 kann dabei an die Komplexität der Schlitze bzw. die Größe oder Ausformung der Schaumstoffausschnitte und deren jeweiliges Entnahmeverhalten aus dem Schlitz angepasst werden. Dem Entfernungswerkzeug 5 kann in der Vorrichtung 1 ein eigener, gesonderter Antrieb 30 zugeordnet werden. Über eine geeignete Ausführung eines Getriebes kann jedoch auch eine Integration des Entfernungswerkzeuges 5 in einen Drehantrieb der Gesamtvorrichtung 1 durchgeführt werden.

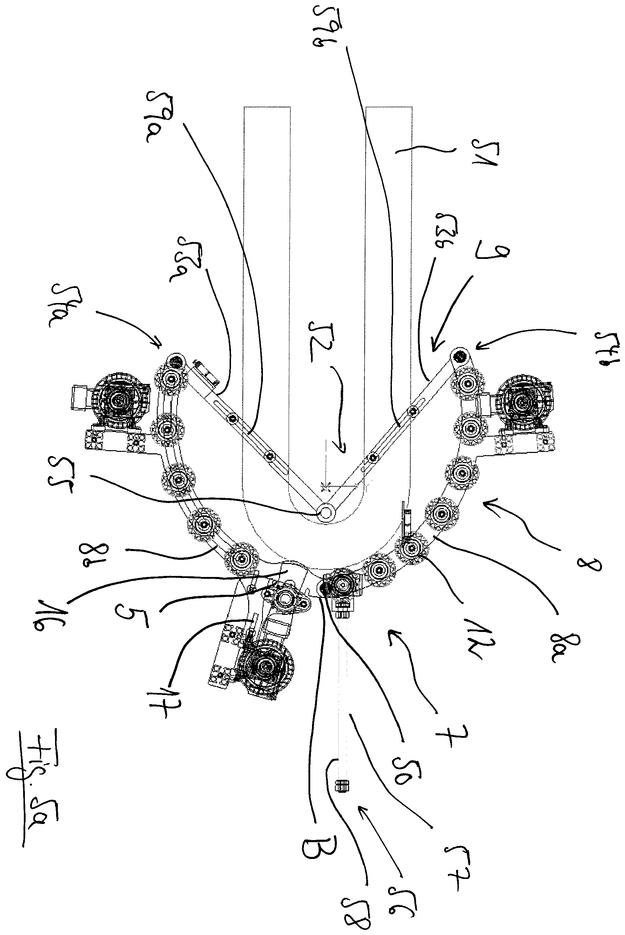

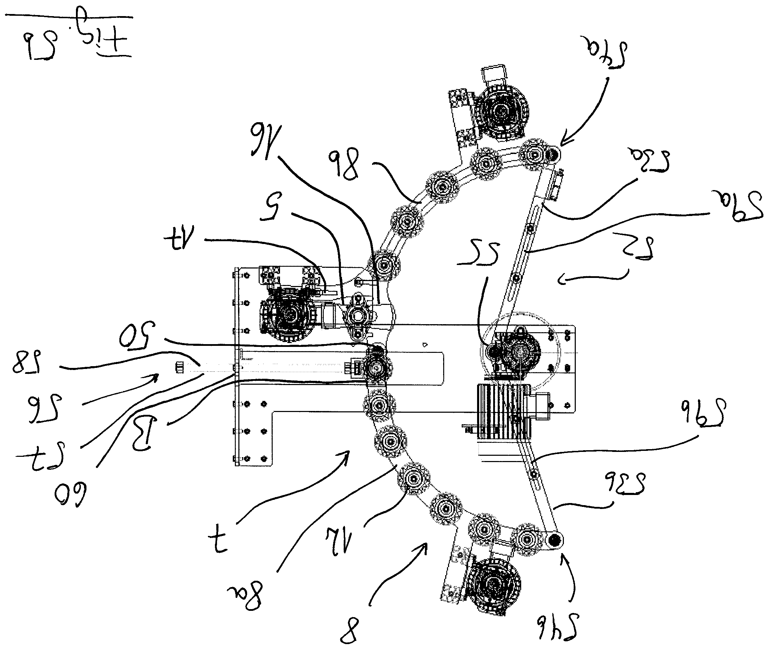

Fig. 5a und b zeigen eine Detailansicht einer bevorzugte Ausführungsform der Erfindung.

Dargestellt sind hier die Enden der Wellen der Rollen 12 des zweiten Fördermittels 7. Die Rollen 12 des zweiten Fördermittels 7 definieren dabei eine Kreisbahn 8 mit im Ausführungsbeispiel zwei relativ zueinander beweglichen Kreisbahnabschnitten 8a, b. Im Bereich des Mittelpunktes des durch die Kreisbahnabschnitte 8a, b definierten Kreises ist das erste Fördermittel 6 bzw. die um die erste Drehachse 10 rotierende Walze 11 angeordnet (vgl. Fig. 2). Dem Scheitelpunkt B der Kreisbahnabschnitte 8a, b nachgeordnet ist das Entfernungswerkzeug 5 angeordnet. Eine Verstellbarkeit des Entfernungswerkzeuges 5 ist durch die Halterung in einer Langlochführung 17 gewährleistet. Hierdurch kann die Eingriffstiefe der Austragselemente 16 des Entfernungswerkzeuges 5 in den in dem Schaumstoffprodukt 51 gebildeten Schlitz eingestellt werden. Das Entfernungswerkzeug 5 weist insgesamt zwei Austragselemente 16 auf, die sich radial von einem Wellenmittelpunkt des Entfernungswerkzeuges 5 weg erstrecken und diametral an der Welle angeordnet sind. Die Schaumstoffausschnitte im Schlitz des Schaumstoffproduktes 51 werden somit nach jeweils einer Drehung des Entfernungswerkzeuges 5 um 180° durch die Austragselemente 16 beaufschlagt. Es erfolgt somit keine kontinuierliche Beaufschlagung der Schaumstoffausschnitte durch die Austragselemente 16. Die Austragselemente 16 tragen jeweils einen Impuls in den Schaumstoffausschnitt ein und bewirken somit dessen Bewegung aus dem Schlitz heraus. Die Rotationsgeschwindigkeit des Entfernungswerkzeuges 5 ist dabei einstellbar.

Im in den Fig. 5a und b gezeigten Ausführungsbeispiel wird das zweite Fördermittel 7 durch wenigstens zwei, die rotierenden Rollen 12 tragende Kreisbahnabschnitte 8a, b gebildet. Die Kreisbahnabschnitte 8a, b sind um eine im Scheitelpunkt B der Kreisbahn 8 vorgesehene Schwenkachse 50 relativ zueinander verschwenkbar ausgebildet sind. Diese Ausgestaltung der erfindungsgemäßen Vorrichtung 1 erlaubt eine noch bessere Anpassung des Spaltes 9 an unterschiedliche Dicken des zu reinigenden Schaumstoffproduktes 51. Die erfindungsgemäße Vorrichtung 1 in dieser bevorzugten Ausführungsform eignet sich dann bspw. für die Bearbeitung von Schaumstoffprodukten 51 mit Dicken von bspw. zwischen 100 und 500mm und größer. In Fig. 5a ist schematisch ein in den Spalt 9 eingeführtes und der Kreisbahn 8 folgend gebogenes Schaumstoffprodukt 51 gezeigt. Der Radius des durch die Kreisbahnabschnitte 8a, b definierten Kreises ist durch Verschwenken der Kreisbahnabschnitte 8a, b veränderbar und weicht bei entsprechender Verschwenkung von der geometrischen Kreisform ab. Die Kreisbahn 8 nimmt dann die Form ähnlicher einer Hyperbel bzw. Parabel an. In Fig. 5b ist eine Kreisbahn 8 mit verschwenkungsbedingt größerem Radius dargestellt. In der gezeigten Stellung eignet sich die Vorrichtung 1 dann bspw. für die Bearbeitung von Schaumstoffprodukten 51 mit Dicken von 500mm und mehr. Den Kreisbahnabschnitten 8a, b zugeordnet ist eine Scherenführung 52 deren Schenkel 53 a, b an den vorderen, äußeren Enden 54 a, b der Kreisbahnabschnitte 8a, b angelenkt sind. Durch Öffnen bzw. Schließen der Scherenführung 52, werden die Kreisbahnabschnitte 8a, b bewegt und der Radius vergrößert bzw. verringert.

Um die Radiusänderung bzw. Verschwenkung der Kreisbahnabschnitte 8a, b durchzuführen ist das Endgelenk 55 der Scherenführung 52 relativ zur Schwenkachse 50 verschiebbar angeordnet und ermöglicht so in einfacher Art und Weise eine Bewegung der Kreisbahnabschnitte 8a, b. Um eine automatische oder manuelle Verstellung der Kreisbahnabschnitte 8a, b durchzuführen, ist der Vorrichtung der Fig. 5a und b ein Stellelement 56 zugeordnet. Durch Angriff an den Kreisabschnitten 8a, b können diese bei Betätigung des Aktors 57, im Ausführungsbeispiel einer Schubstange 58, verstellt werden. Die Schubstange 58 ist durch ein in der Maschinenverkleidung vorgesehenes Widerlager 60 geführt.

Die Positionierung bzw. Führung der Kreisabschnitte 8a, b erfolgt durch die Scherenführung 52. Über die in den Schenkeln 53a, b vorgesehenen Langlöcher 59a, b kann eine manuelle Justierung der der Scherenführung 52 vorgenommen werden. Anstatt der Scherenführung 52 besteht selbstverständlich die geeignete Führungen zu verwenden. Möglich ist auch die Anordnung von Linearantrieben die direkt an den Kreisbahnabschnitte 8a, b angreifen und diese bewegen. Im Ausführungsbeispiel ist als Stellelement 56 ein Linearantrieb, insbesondere ein hydraulischer oder pneumatischer Stell- oder Hubzylinder vorgesehen. Eine Integration in die Maschinen- oder Anlagensteuerung kann realisiert werden.

Die gezeigte Ausführungsform erlaubt eine noch bessere Anpassung der Kreisbahnabschnitte 8a, b bzw. der durch diese definierte kreis- bzw. hyperbelförmige Bahn an Form, Dicke und/oder Größe der zu bearbeitenden Schaumstoffprodukte 51. Durch die verbesserte, angepasste Biegung des jeweiligen Schaumstoffproduktes 51 wird eine verbesserte Schlitzöffnung erzielt, hierdurch das Reinigungsergebnis verbessert und die Effizienz der Vorrichtung 1 erhöht.

## Patentansprüche

1. Vorrichtung (1) zum Entfernen eines Schaumstoffausschnittes aus einem Schlitz eines Schaumstoffproduktes (51), insbesondere einer Matratze, umfassend
- einen Förderer (2) für das Schaumstoffprodukt (51) mit einem Eintragsbereich (3) und einem Austragsbereich (4) und
- mindestens ein Entfernungswerkzeug (5) zum Entfernen des Schaumstoffausschnittes aus dem Schlitz,
wobei der Förderer (2) ein erstes Fördermittel (6) und ein relativ zum ersten beabstandbares zweites, einen Kreisbahnabschnitt (8a, b) definierendes Fördermittel (7) aufweist und zwischen erstem und zweitem Fördermittel (6,7) ein Spalt (9) mit variabler Weite vorgesehen ist, wobei das in den Spalt (9) eingeführte Schaumstoffprodukt (51) durch die Fördermittel (6, 7) in einer Förderrichtung (A) bewegbar ist und der Förderer (2) als Biegevorrichtung für das Schaumstoffprodukt (51) zur Öffnung des Schlitzes dient wobei das zweite Fördermittel (7) eine Vielzahl einzelner, auf einem Kreisbahnabschnitt (8a, b) angeordnete, rotierende Rollen (12) oder Walzen aufweist und die Gesamtheit der Rollen (12) oder Walzen oder alternativ einzelne Rollen (12) oder Walzen gegenüber dem ersten Fördermittel verstellbar angeordnet sind **dadurch gekennzeichnet, dass** das zweite Fördermittel (7) wenigstens zwei, die rotierenden Rollen (12) oder Walzen tragende Kreisbahnabschnitte (8a, b) aufweist und die Kreisbahnabschnitte (8a, b) um eine im Scheitelpunkt (B) der Kreisbahn (8) vorgesehene Schwenkachse (50) relativ zueinander verschwenkbar ausgebildet sind und der Radius des durch die Kreisbahnabschnitte (8a, b) definierten Kreises durch Verschwenken der Kreisbahnabschnitte (8a, b) veränderbar ist.

2. Vorrichtung nach Anspruch 1,
**dadurch gekennzeichnet, dass**
die Weite des Spaltes (9) einstellbar ist, und die Weite des Spaltes über die Länge des Kreisbahnabschnittes (8a, b) variabel ausgebildet ist, insbesondere wobei die Weite des Spaltes (9) im Eintragsbereich (3) geringer ist als im Austragsbereich (4) und/oder die Weite des Spaltes (9) durch Verschiebung des ersten und/oder zweiten Fördermittels (6,7) und/oder Verstellen von Teilen bzw. Teilbereichen des zweiten Fördermittels (7) einstellbar ist.

3. Vorrichtung nach einem der vorhergehenden Ansprüche,
**dadurch gekennzeichnet, dass**
das erste Fördermittel (6) um eine senkrecht zur Förderrichtung (A) ausgerichtete erste Drehachse (10) rotierend ausgebildet ist, wobei die erste Drehachse (10) im Bereich des Mittelpunktes des durch den Kreisbahnabschnitt (8a, b) definierten Kreises verstellbar gelagert ist.

4. Vorrichtung nach Anspruch 3,
**dadurch gekennzeichnet, dass**
eine den Kreisbahnabschnitten (8a, b) zugeordnete, insbesondere an den Abschnittsenden angelenkte Scherenführung (52) vorgesehen ist, wobei ein Endgelenk (55) der Scherenführung (52) relativ zur Schwenkachse (50) verschiebbar angeordnet ist.

5. Vorrichtung nach einem der Ansprüche 3 oder 4,
**dadurch gekennzeichnet, dass**
wenigstens ein den Kreisbahnabschnitten (8a, b) und/oder der Scherenführung (52) zugeordnetes Stellelement (56) für eine Verstellung der Position der Kreisbahnabschnitte (8a, b) vorgesehen ist, wobei das Stellelement (56) als Linearantrieb insbesondere als hydraulischer oder pneumatischer Stell- oder Hubzylinder ausgebildet ist.

6. Vorrichtung nach einem der Ansprüche 3 bis 5,
**dadurch gekennzeichnet, dass**
die Kreisbahnabschnitte (8a, b) nach Art einer die rotierenden Rollen (12) tragenden Kette ausgebildet sind und wobei eine die Rollenenden aufnehmende Führung vorgesehen ist.

7. Vorrichtung nach einem der vorhergehenden Ansprüche,
**dadurch gekennzeichnet, dass**
die Rollen (12) oder Walzen relativ zueinander verstellbar angeordnet sind und/oder die Rotationsgeschwindigkeit der einzelnen Rollen (12) oder Walzen in Förderrichtung (A) in Förderrichtung (A) zu- oder abnehmend einstellbar ist, wobei die Fördermittel (6,7) jeweils gesonderte oder einen gemeinsamen Drehantrieb (30) aufweisen, insbesondere wobei eine Drehmomentübertragung über ein Getriebe, insbesondere ein Zahnrad-, Riemen- oder Kettengetriebe vorgesehen ist.

8. Vorrichtung nach einem der vorhergehenden Ansprüche,
**dadurch gekennzeichnet, dass**
erstes und zweites Fördermittel (6,7) unterschiedliche Fördergeschwindigkeiten aufweisen und/oder der Förderer (2) eine Positionserfassungsvorrichtung, insbesondere wenigstens einen im Austrags- oder Eintragsbereich (3,4) vorgesehenen Sensor (40), bevorzugt einen Taster oder eine Lichtschranke, zur Überwachung der Position und/oder Positionsänderung des Schaumstoffproduktes (51) aufweist und/oder dadurch, dass die Fördermittel (6,7) und/oder die Austragselemente (16) eine reibungserhöhende Beschichtung aufweisen.

9. Vorrichtung nach einem der vorhergehenden Ansprüche,
**dadurch gekennzeichnet, dass**
das wenigstens eine Entfernungswerkzeug (5) zwischen den Rollen (12) oder Walzen des zweiten Fördermittels (7) angeordnet ist und das Entfernungswerkzeug (5) relativ zum Scheitelpunkt (B) des zweiten Fördermittels (7) bzw. des Kreisbahnabschnittes (8a, b) gesehen versetzt, dem Scheitelpunkt (B) vor- oder nachgelagert angeordnet ist und das Entfernungswerkzeug (5) relativ zum ersten Fördermittel (6) variabel beabstandbar ist oder das Entfernungswerkzeug (5) relativ zum Kreisbahnabschnitt (8a, b) zurückgesetzt, insbesondere radial vom ersten Fördermittel (6) beabstandet angeordnet ist oder das Entfernungswerkzeug (5) bewegbar, insbesondere um eine dritte, senkrecht zur Förderrichtung (A) ausgerichtete Drehachse (33) rotierend ausgebildet ist, und die Rotationsgeschwindigkeit des Entfernungswerkzeuges (5) einstellbar ist oder das Entfernungswerkzeug (5) eine Welle (15) mit wenigstens einem auf der Welle (15) angeordneten Austragselement (16) oder Austragselementpaar aufweist, insbesondere wobei die Welle (15) in einer Langlochführung (17) gehaltert ist oder die Austragselemente (16) des wenigstens einen Austragselementpaares diametral zur Wellen (15) angeordnet sind und/oder die Austragselemente (16) als Bürsten, Besen, Leisten, Gebläse, Greifer, Borstenreihe, Düse oder Kombinationen daraus ausgebildet sind oder wenigstens eine Borstenreihe aufweisen.

10. Vorrichtung nach einem der vorhergehenden Ansprüche,
**dadurch gekennzeichnet, dass**
eine Rotationsgeschwindigkeit des Entfernungswerkzeuges (5) einstellbar ist und eine zweimalige oder mehrfache Beaufschlagung des gleichen Schaumstoffausschnittes durch die Austragselemente (16) bzw. das Austragselementpaar durchführbar ist, wobei das Entfernungswerkzeug (5) zwei oder mehr in axialer Richtung der Welle (15) getrennte Austragselemente (16) oder Austragselementpaare aufweist und zwischen der Welle (15) und den Austragselementen (16) ein Träger oder eine Halterung für die Austragselemente (16) bzw. die Bürsten, Besen, Leisten, Gebläse, Greifer, Düse oder Kombinationen daraus oder die wenigstens eine Borstenreihe vorgesehen ist, wobei die Austragselemente (16) lösbar oder fest mit der Welle (15) verbunden, insbesondere mit der Welle (15) verschraubt, verklemmt, verrastet, vernietet, verschweißt oder in die Welle (15) eingeformt sind und zwei oder mehr Austragselemente (16) oder Austragselementpaare schrauben- oder wendelartig an der oder um die Welle (15) herum angeordnet sind oder das Entfernungswerkzeug eine Kombination von zwei oder mehr gleichen oder verschiedenen Austragselementen (16) oder Austragselementpaaren aufweist oder die Austragselemente (16) derart angeordnet sind, dass diese in einen durch Biegen des Schaumstoffproduktes (51) geöffneten Schlitz eingreifen, den Schaumstoffausschnittes ergreifen und aus dem Schlitz entnehmen oder das Entfernungswerkzeug derart ausgebildet oder positionierbar ist, dass ein äußeres Ende des wenigstens einen Austragselementes (16) die Oberfläche des Schaumstoffproduktes (51) kontaktiert.

11. Verfahren zur Entfernung von Schaumstoffausschnitten aus Schlitzen eines Schaumstoffproduktes (51), insbesondere einer Matratze, umfassend die Schritte:
a) Einführen des Schaumstoffproduktes (51) in den Eintragsbereich (3) des Förderers (2), den zwischen einem ersten und einem zweiten Fördermittel (6,7) des Förderers (2) vorgesehenen Spalt (9), zur Bewegung des Schaumstoffproduktes (51) in eine Förderrichtung (A),
b.) Biegen des Schaumstoffproduktes (51) durch Bewegung des Schaumstoffproduktes (51) entlang eines durch die Fördermittel (6,7) definierten Kreisbahnabschnittes (8a, b) zur Öffnung eines einen Schaumstoffausschnitt beinhaltenden Schlitzes des Schaumstoffkörpers,
c.) Entfernen des Schaumstoffausschnittes aus dem geöffneten Schlitz durch ein mit dem Schaumstoffausschnitt in Eingriff bringbares Entfernungswerkzeug (5), und
d.) Ausfördern des Schaumstoffproduktes (51) aus dem Förderer (2) über einen Austragsbereich (4),
**wobei** durch eine in Förderrichtung (A) zunehmende Fördergeschwindigkeit des zweiten Fördermittels (7) eine Beaufschlagung des gebogenen Schaumstoffproduktes (51) mit einer Zugspannung zur weiteren Öffnung des Schlitzes erfolgt, wobei während einer Bewegung des Schaumstoffproduktes (51) eine einmalige, mehrfache oder kontinuierliche Positionserfassung des Schaumstoffproduktes (51) durchgeführt wird, wobei bei Erreichen einer in Förderrichtung (A) ersten definierten Position des Schaumstoffproduktes (51) im Förderer (2) eine Bewegung entgegen der Förderrichtung (A) bis zum Erreichen einer zweiten definierten Position des Schaumstoffproduktes (51) im Förderer (2) durchgeführt wird, wobei nach Erreichen der zweiten definierten Position eine erneute Bewegung in Förderrichtung (A) erfolgt und wobei zum Erfassen des Erreichens der ersten und zweiten Position wenigstens ein Sensor (40) vorgesehen ist.

12. Verfahren nach Anspruch 11,
**dadurch gekennzeichnet, dass**
zur Einstellung der Weite ein Versetzen, Verschieben oder Verschwenken des zweiten Fördermittels (7) vorgesehen ist und/oder die Position des Entfernungswerkzeuges (5) relativ zum Förderer (2) und/oder dem geförderten Schaumstoffprodukt (51) eingestellt wird oder die Eingriffstiefe des Entfernungswerkzeuges (5) in den geöffneten Schlitz durch Versetzen des Entfernungswerkzeuges (5) und/oder der am Entfernungswerkzeug (5) vorgesehenen Austragselemente (16) eingestellt wird.

13. Verfahren nach einem der Ansprüche 11 oder 12,
**dadurch gekennzeichnet, dass**
nach Austrag des Schaumstoffproduktes (51) aus dem Förderer (2) ein Wenden des Schaumstoffkörpers und/oder eine Drehung um 90° oder 180° durchgeführt und das Schaumstoffprodukt (51) erneut in den Förderer (2) eingetragen wird.

## Claims

1. Device (1) for removing a foam cutout from a slot of a foam product (51), in particular a mattress, comprising
- a conveyor (2) for the foam product (51) with an inlet region (3) and an outlet region (4) and
- at least one removal tool (5) for removing the foam cutout from the slot,
the conveyor (2) having a first conveying means (6) and a second conveying means (7) which can be spaced apart relative to the first and defines a circular path section (8a, b), and a gap (9) with variable width being provided between the first and second conveying means (6, 7), the foam product (51) introduced into the gap (9) being movable by the conveying means (6, 7) in a conveying direction (A) and the conveyor (2) serving as a bending device for the foam product (51) for opening the slot, wherein the second conveying means (7) comprises a plurality of individual rotating rollers (12) or drums arranged on a circular path section (8a, b), and the entirety of the rollers (12) or drums or alternatively individual rollers (12) or drums are arranged adjustably relative to the first conveying means, **characterized in that** the second conveying means (7) has at least two circular path sections (8a,b) carrying the rotating rollers (12) or drums and the circular path sections (8a, b) are designed to be pivotable relative to one another about a pivot axis (50) provided at the vertex (B) of the circular path (8) and the radius of the circle defined by the circular path sections (8a, b) is variable by pivoting the circular path sections (8a, b).

2. A device according to claim 1,
**characterised in that**
the width of the gap (9) is adjustable, and the width of the gap is variable over the length of the circular path section (8a, b), in particular wherein the width of the gap (9) is smaller in the inlet region (3) than in the discharge region (4) and/or the width of the gap (9) is adjustable by displacement of the first and/or second conveying means (6, 7) and/or adjustment of parts or partial regions of the second conveying means (7).

3. A device according to one of the preceding claims,
**characterised in that**
the first conveying means (6) is designed to rotate about a first rotational axis (10) aligned perpendicularly to the conveying direction (A), the first rotational axis (10) being mounted adjustably in the region of the centre point of the circle defined by the circular path section (8a, b).

4. A device according to claim 3,
**characterised in that**
a scissor guide (52) associated with the circular path sections (8a, b) and in particular articulated at the section ends is provided, an end joint (55) of the scissor guide (52) being arranged displaceably relative to the pivot axis (50).

5. A device according to one of claims 3 or 4,
**characterised in that**
at least one adjusting element (56) associated with the circular path sections (8a, b) and/or the scissor guide (52) is provided for adjusting the position of the circular path sections (8a, b), the adjusting element (56) being designed as a linear drive, in particular as a hydraulic or pneumatic adjusting or lifting cylinder.

6. A device according to one of claims 3 to 5,
**characterised in that**
the circular path sections (8a, b) are formed in the manner of a chain carrying the rotating rollers (12) and wherein a guide receiving the roller ends is provided.

7. A device according to one of the preceding claims,
**characterised in that**
the rollers (12) or drums are arranged so as to be adjustable relative to one another and/or
the rotational speed of the individual rollers (12) or drums in the conveying direction (A) in the conveying direction (A) can be set to increase or decrease, wherein the conveying means (6, 7) each have a separate or a common rotary drive (30), in particular wherein torque transmission is provided via a gear, in particular a gearwheel, belt or chain drive.

8. A device according to one of the preceding claims,
**characterised in that**
first and second conveying means (6, 7) have different conveying speeds and/or the conveyor (2) has a position sensing device, in particular at least one sensor (40) provided in the discharge or feed region (3, 4), preferably a scanner or a light barrier, for monitoring the position and/or change in position of the foam product (51) and/or **in that** the conveying means (6, 7) and/or the discharge elements (16) have a friction-increasing coating.

9. A device according to one of the preceding claims,
**characterised in that**
the at least one removal tool (5) is arranged between the rollers (12) or rollers of the second conveying means (7), and the removal tool (5) is positioned relative to the apex (B) of the second conveying means (7) or rollers of the second conveying means (7) or rollers of the second conveying means (7). of the circular path section (8a, b), is arranged upstream or downstream of the apex (B) and the removal tool (5) can be variably spaced relative to the first conveying means (6), or the removal tool (5) is set back relative to the circular path section (8a, b), in particular is arranged radially spaced apart from the first conveying means (6), or the removal tool (5) is designed to be movable, in particular rotating about a third axis of rotation (33) aligned perpendicularly to the conveying direction (A), and the rotational speed of the removal tool (5) is adjustable or the removal tool (5) has a shaft (15) with at least one discharge element (16) or discharge element pair arranged on the shaft (15), in particular the shaft (15) being held in an elongated hole guide (17) or the discharge elements (16) of the at least one discharge element pair being arranged diametrically with respect to the shafts (15) and/or the discharge elements (16) being designed as brushes, brooms, strips, blowers, grippers, bristle rows, nozzles or combinations thereof or having at least one bristle row.

10. A device according to one of the preceding claims,
**characterised in that**
a rotational speed of the removal tool (5) can be set and double or multiple loading of the same foam material cutout by the discharge elements (16) or the discharge element pair can be carried out, the removal tool (5) having two or more discharge elements (16) or discharge element pairs which are separated in the axial direction of the shaft (15), and a carrier or a holder for the discharge elements (16) or the discharge element pairs (16) being provided between the shaft (15) and the discharge elements (16). the brushes, brooms, strips, blowers, grippers, nozzles or combinations thereof or the at least one row of bristles is provided, wherein the discharge elements (16) are detachably or firmly connected to the shaft (15), in particular screwed to the shaft (15), clamped, latched, riveted, are welded or formed into the shaft (15) and two or more discharge elements (16) or discharge element pairs are arranged helically or helically on or around the shaft (15) or the removal tool comprises a combination of two or more identical or different discharge elements (16) or discharge element pairs or the discharge elements (16) are arranged in such a way, **in that** these engage in a slot opened by bending the foam product (51), grip the foam cutout and remove it from the slot, or the removal tool is designed or positionable in such a way that an outer end of the at least one discharge element (16) contacts the surface of the foam product (51).

11. Method for removing foam cut-outs from slots of a foam product (51), in particular a mattress, comprising the steps:
a) introducing the foam product (51) into the inlet region (3) of the conveyor (2), the gap (9) provided between a first and a second conveying means (6, 7) of the conveyor (2), for moving the foam product (51) in a conveying direction (A),
b.) bending the foam product (51) by moving the foam product (51) along a circular path portion (8a, b) defined by the conveying means (6, 7) to open a slot of the foam body including a foam cutout,
c.) removing the foam cutout from the open slot by a removal tool (5) engageable with the foam cutout, and
d.) conveying the foam product (51) out of the conveyor (2) via a discharge region (4),
wherein a conveying speed of the second conveying means (7) increasing in the conveying direction (A) causes the bent foam product (51) to be subjected to a tensile stress for further opening of the slot, wherein a single, multiple or continuous position detection of the foam product (51) is carried out during a movement of the foam product (51), wherein on reaching a first defined position in the conveying direction (A) of the foam product (51) in the conveyor (2) a movement is carried out against the conveying direction (A) until a second defined position of the foam product (51) in the conveyor (2) is reached, wherein after reaching the second defined position a new movement takes place in the conveying direction (A) and wherein at least one sensor (40) is provided for detecting the reaching of the first and second position.

12. Method according to claim 11,
**characterised in that**
the second conveying means (7) is displaced or pivoted and/or the position of the removal tool (5) is adjusted relative to the conveyor (2) and/or the foam product (51) being conveyed, or the engagement depth of the removal tool (5) in the opened slot is adjusted by displacing the removal tool (5) and/or the discharge elements (16) provided on the removal tool (5).

13. Method according to one of claims 11 or 12,
**characterised in that**
after the foam product (51) has been discharged from the conveyor (2), the foam body is turned and/or rotated through 90° or 180° and the foam product (51) is again introduced into the conveyor (2).

## Revendications

1. Dispositif (1) pour enlever une découpe en mousse d'une fente d'un produit en mousse (51), en particulier d'un matelas, comprenant
- un convoyeur (2) pour le produit en mousse (51) avec une zone d'entrée (3) et une zone de sortie (4) et
- au moins un outil d'enlèvement (5) pour enlever la découpe en mousse de la fente,
le transporteur (2) ayant un premier moyen de transport (6) et un second moyen de transport (7) qui peuvent être espacés l'un de l'autre par rapport au premier et définit une section de trajet circulaire (8a, b), et un espace (9) à largeur variable étant prévu entre le premier et le second moyen de transport (6, 7), le produit en mousse (51) introduit dans la fente (9) étant mobile par les moyens de transport (6, 7) dans une direction de transport (A) et le transporteur (2) servant de dispositif de pliage pour le produit en mousse (51) pour ouvrir la fente, dans lequel le second moyen de transport (7) comprend une pluralité de rouleaux ou tambours rotatifs individuels (12) disposés sur une section circulaire (8a, b), et la totalité des rouleaux (12) ou tambours ou alternativement des rouleaux individuels (12) ou tambours sont disposés de manière réglable par rapport au premier moyen de transport, **caractérisé en ce que** le second moyen de transport (7) présente au moins deux sections de trajet circulaire (8a,b) portant les rouleaux (12) ou tambours en rotation et les sections de trajet circulaire (8a), b) sont conçus pour pouvoir pivoter l'un par rapport à l'autre autour d'un axe de pivotement (50) prévu au sommet (B) de la trajectoire circulaire (8) et le rayon du cercle défini par les sections de trajectoire circulaire (8a, b) est variable en faisant pivoter les sections de trajectoire circulaire (8a, b).

2. Dispositif selon la revendication 1,
**caractérisé en ce que**
la largeur de la fente (9) est réglable, et la largeur de la fente est variable sur la longueur de la section de trajet circulaire (8a, b), en particulier dans laquelle la largeur de la fente (9) est plus petite dans la région d'entrée (3) que dans la région de sortie (4) et/ou la largeur de la fente (9) est réglable par déplacement des premier et/ou second moyens de transport (6, 7) et/ou ajustement des parties ou régions partielles du second moyens de transport (7).

3. Dispositif selon l'une des revendications précédentes,
**caractérisé en ce que**
le premier moyen de transport (6) est conçu pour tourner autour d'un premier axe de rotation (10) aligné perpendiculairement à la direction de transport (A), le premier axe de rotation (10) étant monté de manière réglable dans la région du point central du cercle défini par la section de trajet circulaire (8a, b).

4. Dispositif selon la revendication 3,
**caractérisé en ce que**
un guide de ciseaux (52) associé aux sections de trajectoire circulaire (8a, b) et en particulier articulé aux extrémités des sections est prévu, une articulation d'extrémité (55) du guide de ciseaux (52) étant disposée de manière déplaçable par rapport à l'axe de pivotement (50).

5. Un dispositif selon l'une des revendications 3 ou 4,
**caractérisé en ce que**
au moins un élément de réglage (56) associé aux tronçons de parcours circulaires (8a, b) et/ou au guide de ciseaux (52) est prévu pour régler la position des tronçons de parcours circulaires (8a, b), l'élément de réglage (56) étant conçu comme un entraînement linéaire, en particulier comme cylindre hydraulique ou pneumatique de réglage ou de levage.

6. Dispositif selon l'une des revendications 3 à 5,
**caractérisé en ce que**
les sections de trajet circulaire (8a, b) sont formées à la manière d'une chaîne portant les rouleaux rotatifs (12) et dans lequel un guide recevant les extrémités des rouleaux est prévu.

7. Dispositif selon l'une des revendications précédentes,
**caractérisé en ce que**
les rouleaux (12) ou tambours sont disposés de manière à être réglables les uns par rapport aux autres et/ou
la vitesse de rotation des différents rouleaux (12) ou tambours dans la direction de transport (A) dans la direction de transport (A) peut être augmentée ou diminuée, les moyens de transport (6, 7) présentant chacun un entraînement rotatif (30) séparé ou commun, en particulier la transmission du couple étant assurée par une roue dentée, en particulier un entraînement par courroie ou chaîne.

8. Dispositif selon l'une des revendications précédentes,
**caractérisé en ce que**
des premier et second moyens de transport (6, 7) présentent des vitesses de transport différentes et/ou le convoyeur (2) présente un dispositif de détection de position, en particulier au moins un capteur (40) prévu dans la zone de décharge ou d'alimentation (3, 4), de préférence un scanner ou une barrière lumineuse, pour surveiller la position et/ou le changement de position du produit mousse (51) et/ou **en ce que** les moyens de transport (6, 7) et/ou les éléments de décharge (16) présentent un revêtement augmentant la friction.

9. Dispositif selon l'une des revendications précédentes,
**caractérisé en ce que**
l'au moins un outil d'enlèvement (5) est disposé entre les rouleaux (12) ou les rouleaux du second moyen de transport (7), et l'outil d'enlèvement (5) est positionné par rapport au sommet (B) du second moyen de transport (7) ou aux rouleaux du second moyen de transport (7) ou aux rouleaux du second moyen de transport (7). de la section de trajet circulaire (8a, b), est disposée en amont ou en aval du sommet (B) et l'outil d'enlèvement (5) peut être espacé de manière variable par rapport au premier moyen de transport (6), ou l'outil d'enlèvement (5) est reculé par rapport à la section de trajet circulaire (8a, b), notamment est disposé radialement écarté du premier moyen de transport (6) ou l'outil d'enlèvement (5) est conçu pour se déplacer, notamment tourner autour d'un troisième axe de rotation (33) perpendiculaire à la direction de transport (A), et la vitesse de rotation de l'outil d'enlèvement (5) est réglable ou l'outil d'enlèvement (5) présente un arbre (15) avec au moins un élément de décharge (16) ou une paire d'éléments de décharge disposés sur l'arbre (15), en particulier l'arbre (15) étant maintenu dans un guide de trou allongé (17) ou les éléments de décharge (16) de la au moins une paire d'éléments de décharge étant disposés diamétralement par rapport aux arbres (15) et/ou les éléments de décharge (16) étant conçus sous forme de brosses, balais, bandes, souffleurs, pinces, buses ou leurs combinaisons ou ayant au moins une rangée de soies.

10. Dispositif selon l'une des revendications précédentes,
**caractérisé en ce que**
une vitesse de rotation de l'outil d'enlèvement (5) peut être réglée et une charge double ou multiple de la même découpe de mousse peut être effectuée par les éléments de décharge (16) ou la paire d'éléments de décharge, l'outil d'enlèvement (5) comportant deux ou plusieurs éléments de décharge (16) ou paires d'éléments de décharge qui sont séparés dans la direction axiale de l'arbre (15) et un support ou support des éléments de décharge (16) ou les paires d'éléments de décharge (16) étant prévus entre l'arbre (15) et les éléments de décharge (16). les brosses, balais, bandes, bandes, soufflantes, pinces, buses ou leurs combinaisons ou la rangée au moins de soies est prévue, les éléments d'évacuation (16) étant reliés de manière amovible ou fixe à l'arbre (15), en particulier vissés à l'arbre (15), serrés, verrouillés, rivés, sont soudés ou formés dans l'arbre (15) et deux ou plusieurs éléments de décharge (16) ou paires d'éléments de décharge sont disposés en hélice ou en hélice sur ou autour de l'arbre (15) ou l'outil d'enlèvement comprend une combinaison de deux ou plusieurs éléments de décharge identiques ou différents (16) ou paires d'éléments de décharge ou les éléments de décharge (16) sont disposés de cette manière, **en ce que** ceux-ci s'engagent dans une fente ouverte en pliant le produit en mousse (51), saisissent la découpe en mousse et l'enlèvent de la fente, ou l'outil d'enlèvement est conçu ou positionnable de telle manière qu'une extrémité extérieure du au moins un élément de décharge (16) entre en contact avec la surface du produit en mousse (51).

11. Procédé pour enlever des découpes en mousse des fentes d'un produit en mousse (51), en particulier d'un matelas, comprenant les étapes suivantes :
a) introduire le produit en mousse (51) dans la zone d'entrée (3) du convoyeur (2), l'espace (9) prévu entre un premier et un second moyens de transport (6, 7) du convoyeur (2), pour déplacer le produit en mousse (51) dans une direction de transport (A),
b.) plier le produit en mousse (51) en déplaçant le produit en mousse (51) le long d'une partie de trajet circulaire (8a, b) définie par le moyen de transport (6, 7) pour ouvrir une fente du corps en mousse incluant une découpe en mousse,
c.) enlever la découpe en mousse de la fente ouverte à l'aide d'un outil d'enlèvement (5) pouvant s'engager avec la découpe en mousse, et
d.) transporter le produit en mousse (51) hors du convoyeur (2) via une zone de décharge (4),
dans laquelle une vitesse de transport du second moyen de transport (7) augmentant dans la direction de transport (A) soumet le produit en mousse plié (51) à une contrainte de traction pour une ouverture supplémentaire de la fente, une détection de position unique, multiple ou continue du produit en mousse (51) étant effectuée pendant un mouvement du produit en mousse (51), dans laquelle, en atteignant une première position définie dans la direction de transport (A) du produit en mousse (51) dans le convoyeur (2), un mouvement est effectué à l'encontre de la direction de transport (A) jusqu'à ce qu'une deuxième position définie du produit en mousse (51) dans le convoyeur (2) soit atteinte, un nouveau mouvement ayant lieu dans la direction de transport (A), et au moins un capteur (40) est prévu pour détecter la première et la deuxième position atteintes après l'arrivée dans cette seconde position définie.

12. Procédé selon la revendication 11,
**caractérisé en ce que**
le second moyen de transport (7) est déplacé ou pivoté et/ou la position de l'outil d'enlèvement (5) est ajustée par rapport au convoyeur (2) et/ou au produit en mousse (51) transporté, ou la profondeur d'engagement de l'outil d'enlèvement (5) dans la fente ouverte est ajustée en déplaçant l'outil d'enlèvement (5) et/ou les éléments de décharge (16) prévus sur l'outil d'enlèvement (5).

13. Procédé selon l'une des revendications 11 ou 12,
**caractérisé en ce que**
après que le produit en mousse (51) a été déchargé du convoyeur (2), le corps en mousse est tourné et/ou tourné de 90° ou 180° et le produit en mousse (51) est à nouveau introduit dans le convoyeur (2).
